# EUROPEAN PATENT APPLICATION

(11) **EP 3 647 903 A1**
(43) Date of publication of application: **06.05.2020**
(21) Application number: 19177348.0
(22) Date of filing: 29.05.2019
(51) Int. Cl.: G06F 1/3231, G06F 1/3287, G06F 1/16

(54) **WEARABLE DEVICE AND POWER SAVING METHOD THEREOF**

(30) Priority: 31.10.2018 TW 107138657
(71) Applicant: Princo Corp., Hsinchu 300 (TW)
(72) Inventor: CHIU, Pei-Liang, 300 Hsinchu (TW)
(74) Representative: Patentanwälte Olbricht Buchhold Keulertz

(57) **Abstract**

A wearable device (10) and a power saving method thereof are proposed. The wearable device (10) includes a processor (30); a wireless communication module (32) coupled to the processor (30) and configured to implement wireless communication with an external device; a functional module (34) coupled to the processor (30) and including a plurality of controllers (341) and a plurality of functional members (342), the controllers (341) correspondingly connected to the functional members (342), each of the functional members (342) configured to carry out at least one function; and a user activity monitor (36) coupled to the processor (30) and configured to collect user activity information, wherein when the user activity information indicates a low-level activity, the processor (30) disables the wireless communication module (32) and/or at least one of the functional members (342) of the functional module (34). The wearable device can reduce power consumption.

## Description

### BACKGROUND

### 1. Field of the Disclosure

The present application relates to power saving technologies, and more particularly to a wearable device and a power saving method thereof.

### 2. Description of Related Art

Power consumption is quite important for wearable devices since it concerns the time available for users after the wearable devices are fully charged. Some functions consume too much power and thus are not applicable to the wearable devices. This will restrict development of the wearable devices. How to reduce power consumption of the wearable devices is an important issue in this field. In existing arts, switches are provided to control activation of these functions. However, this approach is lack of convenience for the users. It is easy for the users to forget to switch off some functions to cause unnecessary power consumption. Accordingly, there is a need to provide a new solution to solve this problem.

### SUMMARY

The present application provides a wearable device and a power saving method thereof, which are capable of reducing power consumption.

In an aspect, the present application provides a wearable device, including: a processor; a wireless communication module coupled to the processor, configured to implement wireless communication with an external device; a functional module coupled to the processor, the functional module including a plurality of controllers and a plurality of functional members, the controllers correspondingly connected to the functional members, each of the functional members configured to carry out at least one function; and a user activity monitor coupled to the processor, configured to collect user activity information, wherein when the user activity information indicates a low-level activity, the processor disables the wireless communication module and/or at least one of the functional members of the functional module.

In an embodiment of the present application, the wearable device further includes a user activity determining circuit coupled between the user activity monitor and the processor, configured to receive the user activity information collected by the user activity monitor, determine an activity level corresponding to the user activity information, and output a signal representing the activity level of the user activity information to the processor, wherein enabling or disabling the wireless communication module and/or the at least one of the functional members of the functional module by the processor is based on the activity level.

In an embodiment of the present application, the processor commands the controllers correspondingly connected to the functional members to enable or disable the functional members.

In an embodiment of the present application, the user activity monitor includes a user motion sensor which is selected from a group consisting of a gravity sensor (G-sensor), an accelerometer, an inertial sensor, and a gyroscope sensor.

In an embodiment of the present application, the wireless communication module is selected from a group consisting of a Bluetooth communication module, a near field communication (NFC) module, and a radio frequency identification (RFID) communication module.

In an embodiment of the present application, the functional members of the functional module include a sensor which is selected from a group consisting of a magnetometer, an accelerometer, and a gyroscope.

In an embodiment of the present application, the functional members of the functional module include a backlight module of a display, and the controller connected to the backlight module is a backlight controller.

In an embodiment of the present application, the functional members of the functional module include a physical indicator for providing time information, and the controller connected to the physical indicator is a movement.

In an embodiment of the present application, the wearable device is a wristwatch which includes: a housing exposing an opening at a side thereof; a transparent top cover, covering the exposed opening on the housing, the housing and the transparent top cover defining the receiving room; a dial, disposed in the receiving room; a plurality of physical scales, forming on a face of the dial facing the transparent top cover; at least one physical indicator, located between the dial and the transparent top cover; and a movement, configured to drive the at least one physical indicator to provide the time information by cooperation between the at least one physical indicator and the physical scales on the dial.

In another aspect, the present application provides a wearable device, including: a processor; a wireless communication module coupled to the processor, configured to implement wireless communication with an external device; a functional module coupled to the processor, the functional module including a plurality of controllers and a plurality of functional members, the controllers correspondingly connected to the functional members, each of the functional members configured to carry out at least one function; a user activity monitor coupled to the processor, configured to collect user activity information; and a user activity determining circuit coupled between the user activity monitor and the processor, configured to receive the user activity information collected by the user activity monitor, determine an activity level corresponding to the user activity information, and output a signal representing the activity level of the user activity information to the processor, wherein based on the activity level, the processor enables or disables the wireless communication module and/or at least one of the functional members of the functional module, and wherein the processor commands the controllers correspondingly connected to the functional members to enable or disable the functional members.

In still another aspect, the present application provides a power saving method for a wearable device, the wearable device including a processor; a wireless communication module coupled to the processor and configured to implement wireless communication with an external device; and a functional module coupled to the processor and including a plurality of controllers and a plurality of functional members, the controllers correspondingly connected to the functional members, each of the functional members configured to carry out at least one function, the method including: utilizing a user activity monitor to collect user activity information; utilizing a user activity determining circuit to receive the user activity information collected by the user activity monitor, determine an activity level corresponding to the user activity information, and output a signal representing the activity level of the user activity information to the processor; and based on the activity level, utilizing the processor to enable or disable the wireless communication module and/or at least one of the functional members of the functional module.

The wearable device of the present application includes the processor and the user activity monitor (e.g., a gravity sensor or an accelerometer). Based on the user activity level, the processor can switch on or off one or more functions (e.g., a wireless transmission function, a sensor function, and etc.) of the wearable device. Some of the functions are switched off when a user is in a state of a low-level activity. The functions already switched off can be recovered or some of the functions can be automatically switched on when the user is in a state of a high-level activity. Accordingly, the present application can reduce unnecessary power consumption and can also improve user experience in another aspect.

### BRIEF DESCRIPTION OF DRAWINGS

FIG. 1 is a top view of a wristwatch according to an embodiment of the present application.
FIG. 2 is an exploded view of the wristwatch shown in FIG. 1.
FIG. 3 is a schematic diagram showing a power saving framework according to the present application.
FIG. 4 is a flowchart of a power saving method for a wristwatch according to the present application.

### DETAILED DESCRIPTION OF PREFERRED EMBODIMENTS

To make the objectives, technical schemes, and technical effects of the present application more clearly and definitely, the present application will be described in details below by using embodiments in conjunction with the appending drawings. It should be understood that the specific embodiments described herein are merely for explaining the present application, and as used herein, the term "embodiment" refers to an instance, an example, or an illustration but is not intended to limit the present application. In addition, the articles "a" and "an" as used in the specification and the appended claims should generally be construed to mean "one or more" unless specified otherwise or clear from the context to be directed to a singular form.

The present application relates to a wearable device (e.g., a wristwatch) and a power saving method thereof. The wearable device of the present application includes a user activity monitor (e.g., a gravity sensor or accelerometer) capable of collecting user activity information. Based on a user activity level, the present application can switch on or off one or more functions of the wearable device, thereby reducing unnecessary power consumption. In some embodiments of the present application, one or more functions of the wearable device can be switched on in right time, thereby improving user experience.

The wearable device of the present application can be implemented by a wristwatch or a wristband, but is not limited thereto. In some examples, the wristwatch can be a wristwatch of a traditional framework having a physical indicator (e.g., a hour hand, a minute hand, and a second hand). It can also be a digital watch or a smartwatch having a display.

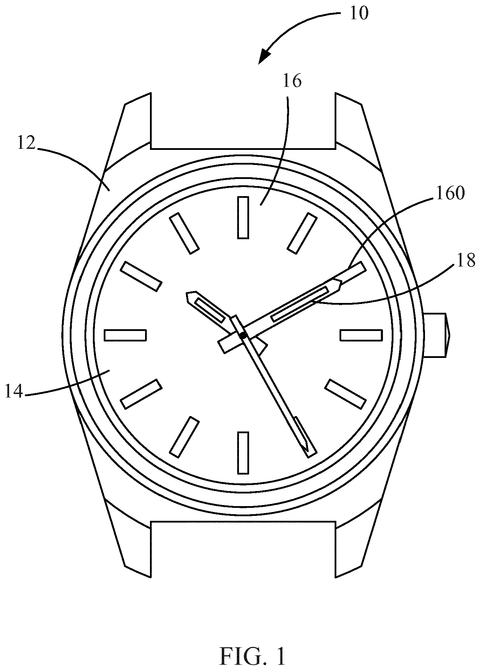

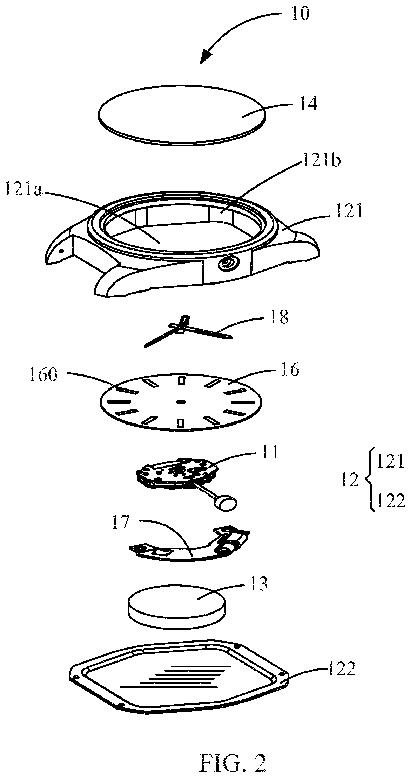

The following is illustrated using a wristwatch having physical indicators. FIG. 1 is a top view of a wristwatch according to an embodiment of the present application. FIG. 2 is an exploded view of the wristwatch shown in FIG. 1.

As shown in FIGs. 1 and 2, the wristwatch 10 includes a housing 12, a transparent top cover 14, a dial 16, a plurality of physical scales 160 disposed on the dial 16, at least one physical indicator 18, and a movement 11. An opening exposes at a side of the housing 12. The transparent top cover 14 covers the exposed opening on the housing 12. The housing 12 and the transparent top cover 14 define a receiving room. Specifically, the housing 12 includes an outer case 121 and a bottom cover 122. The outer case 121 has a closed ring structure constructed by a successive solid material. The closed ring structure has a first opening 121a at a first side and a second opening 121b at a second side opposite to the first side. The first opening 121a of the closed ring structure is sealed by the bottom cover 122. The second opening 121b of the closed ring structure is sealed by the transparent top cover 14. The receiving room is defined by the outer case 121, the bottom cover 122, and the transparent top cover 14. The transparent top cover 14, the dial 16, the physical scales 160, the at least one physical indicator 18, and the movement 11 construct a time indicating device for providing time information.

The dial 16, the at least one physical indicator 18, and the movement 11 are disposed in the receiving room. The physical scales 160 on the dial 16 forms on a face of the dial 16 facing the transparent top cover 14. The at least one physical indicator 18 is located between the dial 16 and the transparent top cover 14. The at least one physical indicator 18 is located above the physical scales 160. Specifically, the physical scales 160 disposed on the face of the dial 16 are one to twelve o'clock, for example. The at least one physical indicator 18 may include an hour hand, a minute hand, and a second hand, or other indicators for specific use. The movement 11 is used to drive the at least one physical indicator 18 to provide the time information by cooperation between the at least one physical indicator 18 and the physical scales 160 on the dial 16. The transparent top cover 14 is transparent. Through the transparent top cover 14, the user can perceive position information (i.e., the time information) indicated by the at least one physical indicator 18.

The wristwatch 10 further includes a circuit board 17 having electronic components disposed thereon, and a battery 13 configured to supply power to the movement 11 and the electronic components on the circuit board 17. Delivery of the electric power of the battery 13 may be in charge of a power management unit (not shown) for providing stable and reliable electric power.

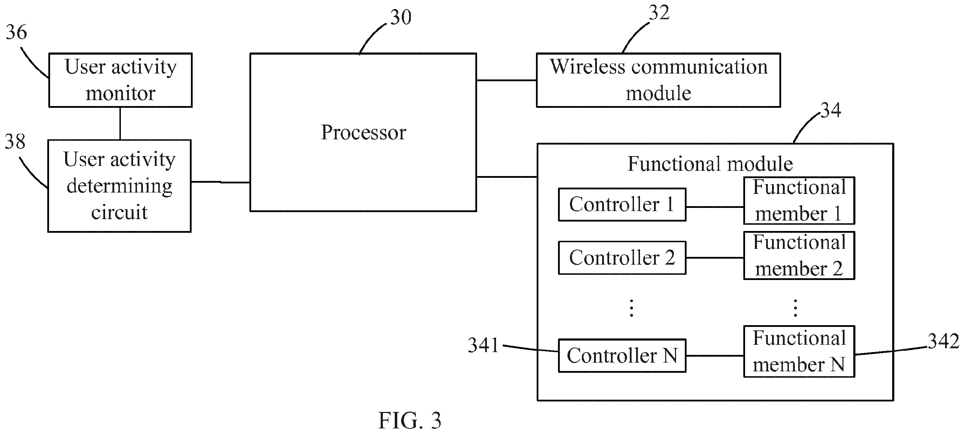

Referring to FIG. 3 with reference to FIG. 2, the wristwatch 10 further includes a processor 30, a wireless communication module 32, a functional module 34, a user activity monitor 36, and a user activity determining circuit 38 that are disposed on the circuit board 17. As shown in FIG. 3, the wireless communication module 32 is coupled to the functional module 34 and the processor 30. The user activity monitor 36 is coupled to the processor 30 via the user activity determining circuit 38. The processor 30 can be implemented by a programable controller, for example. The processor 30 can also be implemented by a processor including a single microprocessor or one or more microprocessors.

The wireless communication module 32 can communicate with an external device by wireless communication. The wireless communication module 32 can be implemented by a Bluetooth communication module, a near field communication (NFC) module, or a radio frequency identification (RFID) communication module, but is not limited thereto. The wireless communication module 32 implements a communication function for the wristwatch 10. The functional module 34 is configured to provide various functions such as a sensing function, a display function, a pointer control function, and etc.

The functional module 34 includes a plurality of controllers 341 (such as controller 1, controller 2, ..., and controller N) and a plurality of functional members 342 (such as functional member 1, functional member 2, ..., and functional member N). Basically, the controllers 341are correspondingly connected to the functional members 342. Each of the functional members 342 is configured to carry out at least one function. The functional member 342 can be a combination of a plurality of functional members. These functional members can be connected to a controller. The processor 30 can command the controller to switch on or off a corresponding function. Also, the controller 341 can be a combination of a plurality of controllers. These controllers are connected to one or more functional members. The processor 30 can command these controllers to switch on or off one or more corresponding functions.

For example, the functional module 34 includes various sensors and controllers corresponding to the sensors, such as magnetometers, gravity sensors or accelerometers, gyroscopes, GPS signal transceivers, physiological monitors, and etc. In addition, the functional member 341 can be the physical indicator 18 and the controller 341 can be the movement 11. In addition to providing the time information, the physical indicator 18 can also serve as an indicator indicating other information. The processor 30 can command the controller 341 to switch on or off the function of the physical indicator 18 to provide the time information and/or switch on or off the function of the physical indicator 18 to indicate other information. In addition, in a situation that the wearable device having a display (not shown), the processor 30 can command a controller (i.e., a backlight controller) connected to a backlight module (not shown) of the display to switch on or off the backlight.

Referring to FIG. 3 again, the user activity monitor 36 is configured to collect user activity information. When the user activity information indicates a low-level activity, the processor 30 disables the wireless communication module 32 and/or at least one of the functional members 342 of the functional module 34. Specifically, the user activity determining circuit 38 receives the user activity information collected by the user activity monitor 36, determines an activity level corresponding to the user activity information, and outputs a signal representing the activity level of the user activity information to the processor 30. Enabling or disabling the wireless communication module 32 and/or the at least one of the functional members 342 of the functional module 34 by the processor 30 is based on the activity level. Specifically, the processor 30 commands the controllers 341 correspondingly connected to the functional members 342 to enable or disable the functional members 342. The user activity monitor 36 includes a user motion sensor which can be a gravity sensor (G-sensor), an accelerometer, an inertial sensor, or a gyroscope sensor.

The user activity determining circuit 38 can determine the activity level based on a comparison made between the strength or frequency or other characteristics of the signal transmitted from the user activity monitor 36 and one or more thresholds. For example, when the user activity determining circuit 38 determines that user activities are of a low-level activity (e.g., a user does not wear the wristwatch 10 or is sleeping or takes a rest), the processor 30 makes the wireless communication module 32 disabled and the processor 30 can also make one or more functional members 342 of the functional module 34 disabled. For example, the sensors are turned off, the backlight of the display is turned off, or the function of the physical indicator 18 to indicate other information is switched off or the action of the physical indicator 18 is directly terminated.

In an embodiment, when the user activity determining circuit 38 determines that user activities are of a high-level activity (e.g., signals sensed by the user activity monitor 36 are greater than a predetermined threshold), the processor 30 recovers the function previously switched off or automatically switches on some functions of the wristwatch 10. For example, when a high-level user activity is detected, the processor 30 commands the backlight controller to automatically turn on the backlight of the display.

In an embodiment, the user activity determining circuit 38 can output signals representing different levels of user activities. For example, several different thresholds are set in the user activity determining circuit 38 for grading the user activities into a high-level activity, a moderate-level activity, and a low-level activity, for example. Based on the user activity level, the processor 30 switches on or off the wireless communication module 32 and/or the functions corresponding to the functional members 342 of the functional module 34. For example, different start-up schemes are set according to the user activity level. For example, the high-level activity corresponds to a first start-up scheme, the moderate-level activity corresponds to a second start-up scheme, and the low-level activity corresponds to a third start-up scheme. The number of functions launched in the first start-up scheme is greater than that in the second start-up scheme. The number of functions launched in the second start-up scheme is greater than that in the third start-up scheme. For example, in the first start-up scheme, the wireless communication function, the indication function of physical hands, and the functions of the sensors are switched on; in the second start-up scheme, the functions of the wireless communication and the physical indicator are switched on but the functions of the sensors are switched off; and in the third start-up scheme, the function of the physical indicator is switched on but the functions of the wireless communication and the sensors are switched off, or all of the three types of functions are switched off.

The wearable device of the present application includes the processor and the user activity monitor (e.g., a gravity sensor or an accelerometer). Based on the user activity level, the processor can switch on or off one or more functions (e.g., a wireless transmission function, a sensor function, and etc.) of the wearable device. Some of the functions are switched off when a user is in a state of a low-level activity. The functions already switched off can be recovered or some of the functions can be automatically switched on when the user is in a state of a high-level activity. Accordingly, the present application can reduce unnecessary power consumption and can also improve user experience in another aspect.

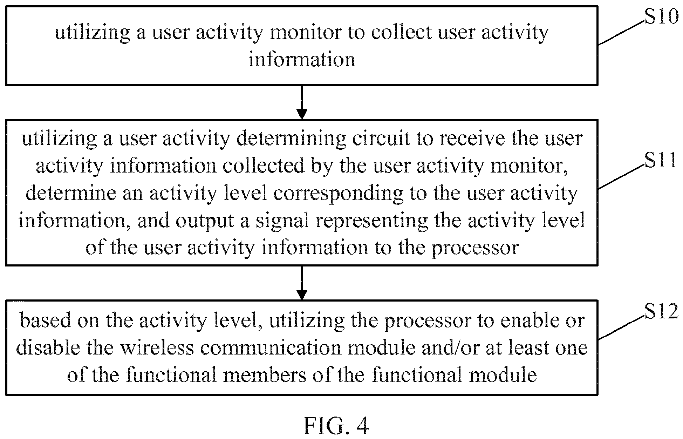

FIG. 4 is a flowchart of a power saving method for a wristwatch according to an embodiment of the present application. Referring to FIG. 4 with reference to above context, the wearable device includes a processor 30; a wireless communication module 32 coupled to the processor 30 and configured to implement wireless communication with an external device; and a functional module 34 coupled to the processor 30 and including a plurality of controllers 341 and a plurality of functional members 342. The controllers 341 are correspondingly connected to the functional members 342. Each of the functional members 342 is configured to carry out at least one function. The method includes the following steps:
Step S10 - utilizing a user activity monitor 36 to collect user activity information.
Step S11 - utilizing a user activity determining circuit 38 to receive the user activity information collected by the user activity monitor 36, determine an activity level corresponding to the user activity information, and output a signal representing the activity level of the user activity information to the processor 30.
Step S12 - based on the activity level, utilizing the processor 30 to enable or disable the wireless communication module 32 and/or at least one of the functional members 342 of the functional module 341.

Other details of the power saving method illustrated in FIG. 4 can be referred to the descriptions on the wristwatch or the wearable device in above context, and are not repeated herein.

While the preferred embodiments of the present application have been illustrated and described in detail, various modifications and alterations can be made by persons skilled in this art. The embodiment of the present application is therefore described in an illustrative but not restrictive sense. It is intended that the present application should not be limited to the particular forms as illustrated, and that all modifications and alterations which maintain the realm of the present application are within the scope as defined in the appended claims.

## Claims

1. A wearable device (10), comprising:
a processor (30);
a wireless communication module (32) coupled to the processor (30), configured to implement wireless communication with an external device; and
a functional module (34) coupled to the processor (30), the functional module (34) comprising a plurality of controllers (341) and a plurality of functional members, the controllers (341) correspondingly connected to the functional members (342), each of the functional members (342) configured to carry out at least one function,
**characterized in that** the wearable device (10) further comprises:
a user activity monitor (36) coupled to the processor (30), configured to collect user activity information, wherein when the user activity information indicates a low-level activity, the processor (30) disables the wireless communication module (32) and/or at least one of the functional members (342) of the functional module (34).

2. The wearable device according to claim 1, **characterized in that** the wearable device (10) further comprises:
a user activity determining circuit (38) coupled between the user activity monitor (36) and the processor (30), configured to receive the user activity information collected by the user activity monitor (36), determine an activity level corresponding to the user activity information, and output a signal representing the activity level of the user activity information to the processor (30), wherein enabling or disabling the wireless communication module (32) and/or the at least one of the functional members (342) of the functional module (34) by the processor (30) is based on the activity level.

3. The wearable device according to claim 1, **characterized in that** the processor (30) commands the controllers (341) correspondingly connected to the functional members (342) to enable or disable the functional members (342).

4. The wearable device according to claim 1, **characterized in that** the user activity monitor (36) comprises a user motion sensor which is selected from a group consisting of a gravity sensor (G-sensor), an accelerometer, an inertial sensor, and a gyroscope sensor.

5. The wearable device according to claim 1, **characterized in that** the wireless communication module (32) is selected from a group consisting of a Bluetooth communication module, a near field communication (NFC) module, and a radio frequency identification (RFID) communication module.

6. The wearable device according to claim 1, **characterized in that** the functional members (342) of the functional module (34) comprise a sensor which is selected from a group consisting of a magnetometer, an accelerometer, and a gyroscope.

7. The wearable device according to claim 1, **characterized in that** the functional members (342) of the functional module (34) comprise a backlight module of a display, and the controller (341) connected to the backlight module is a backlight controller.

8. The wearable device according to claim 1, **characterized in that** the functional members (342) of the functional module (34) comprise a physical indicator (18) for providing time information, and the controller (341) connected to the physical indicator (18) is a movement (11).

9. The wearable device according to claim 1, **characterized in that** the wearable device (10) is a wristwatch which comprises:
a housing (12) exposing an opening at a side thereof;
a transparent top cover (14), covering the exposed opening on the housing (12), the housing (12) and the transparent top cover (14) defining the receiving room;
a dial (16), disposed in the receiving room;
a plurality of physical scales (160), forming on a face of the dial (16) facing the transparent top cover (14);
at least one physical indicator (18), located between the dial (16) and the transparent top cover (14); and
a movement (11), configured to drive the at least one physical indicator (18) to provide the time information by cooperation between the at least one physical indicator (18) and the physical scales (160) on the dial (16).

10. A power saving method for a wearable device (10), the wearable device (10) comprising a processor (30); a wireless communication module (32) coupled to the processor (30) and configured to implement wireless communication with an external device; and a functional module (34) coupled to the processor (30) and comprising a plurality of controllers (341) and a plurality of functional members (342), the controllers (341) correspondingly connected to the functional members (342), each of the functional members (342) configured to carry out at least one function, **characterized in that** the method comprises:
utilizing a user activity monitor (36) to collect user activity information;
utilizing a user activity determining circuit (38) to receive the user activity information collected by the user activity monitor (36), determine an activity level corresponding to the user activity information, and output a signal representing the activity level of the user activity information to the processor (30); and
based on the activity level, utilizing the processor (30) to enable or disable the wireless communication module (32) and/or at least one of the functional members (342) of the functional module (34).

11. The method according to claim 1, **characterized in that** the method further comprises:
utilizing a user activity determining circuit (38) to receive the user activity information collected by the user activity monitor (36), determine an activity level corresponding to the user activity information, and output a signal representing the activity level of the user activity information to the processor (30), wherein enabling or disabling the wireless communication module (32) and/or the at least one of the functional members (342) of the functional module (34) by the processor (30) is based on the activity level.

12. The method according to claim 10, **characterized in that** the processor (30) commands the controllers (341) correspondingly connected to the functional members (342) to enable or disable the functional members (342).

13. The method according to claim 10, **characterized in that** the user activity monitor (36) comprises a user motion sensor which is selected from a group consisting of a gravity sensor (G-sensor), an accelerometer, an inertial sensor, and a gyroscope sensor.

14. The method according to claim 10, **characterized in that** the wireless communication module (32) is selected from a group consisting of a Bluetooth communication module, a near field communication (NFC) module, and a radio frequency identification (RFID) communication module.

15. The method according to claim 10, **characterized in that** the functional members (342) of the functional module (34) comprise a sensor which is selected from a group consisting of a magnetometer, an accelerometer, and a gyroscope.
